Europäisches Patentamt

(19) European Patent Office

Office européen des brevets

(11) Publication number: **0 328 574 B1**

(12) **EUROPEAN PATENT SPECIFICATION**

(45) Date of publication of patent specification:
08.01.92 Bulletin 92/02

(51) Int. Cl.$^5$: **C05F 3/06, B01J 2/16,**
**F26B 3/08, C05F 3/00,**
**C02F 11/08**

(21) Application number: 88906140.4

(22) Date of filing: 13.07.88

(86) International application number:
**PCT/NL88/00034**

(87) International publication number:
**WO 89/00550 26.01.89 Gazette 89/03**

(54) **PROCESS FOR THE CONVERSION AND WORKING UP OF A MIXTURE OF ORGANIC MATTER, ANORGANIC MATTER AND WATER TO A NEARLY DRY PRODUCT, AS WELL AS AN INSTALLATION FOR THE EXECUTION OF THE PROCESS AND APPLICATION THEREOF BY THE CONVERSION OF MANURE SLURRY.**

(30) Priority: 14.07.87 NL 8701651

(43) Date of publication of application:
23.08.89 Bulletin 89/34

(45) Publication of the grant of the patent:
08.01.92 Bulletin 92/02

(84) Designated Contracting States:
AT BE CH DE FR GB IT LI LU NL SE

(56) References cited:
EP-A- 0 157 569
FR-A- 2 346 654
GB-A- 2 149 898
US-A- 4 205 456

(73) Proprietor: FHJ PROCESS B.V.
Kennedylaan 2
NL-6029 RE Sterksel (NL)

(72) Inventor: BUKKEMS, Franciscus, Henricus,
Josephus
Leidsegracht 51
NL-1017 NB Amsterdam (NL)

deposited on the particles of solid matter or participate as individual particles in the fluidized bed. Parts of the fluidized bed mass may be discharged periodically or continously to product storage. In case of the conversion of manure slurry this mass consist of a high value fertilizer, which is rich in nitrogen, phosphorus and potassium. If necesarry, particles of solid matter may be added periodically or continously to the fluidized bed. Water vapour out of the fluidized bed is carried through a separation apparatus — for example a cyclone —, in which possible entrained particles of solid matter are separated and subsequently discharged to a product storage. The water vapour, in which extra gas may occur also, is condensed subsequently partially or totally in a heat exchanger, whereby the released heat is used for heating up of the incoming mixture. Also condensate from the evaporation means in the evaporation section may be used for heating up of the mixture. Heat from the gas phase flow after the reaction section may be used as well for further heating of the mixture. The rest heat of water vapour, condensate and gas, which remains after execution of the process, described above, may be used for heating of for instance livestock houses, horticultural houses (greenhouses) and dwellings. In conclusion it is mentioned, that there is also the possibility in the process to carry an extra amount of mixture to the evaporation section and notably fluidized bed, while circumventing the reaction section. This becomes possible, if a surplus of heat exists in the evaporation section. The capacity of an installation for the execution of said process is enlarged by this option.

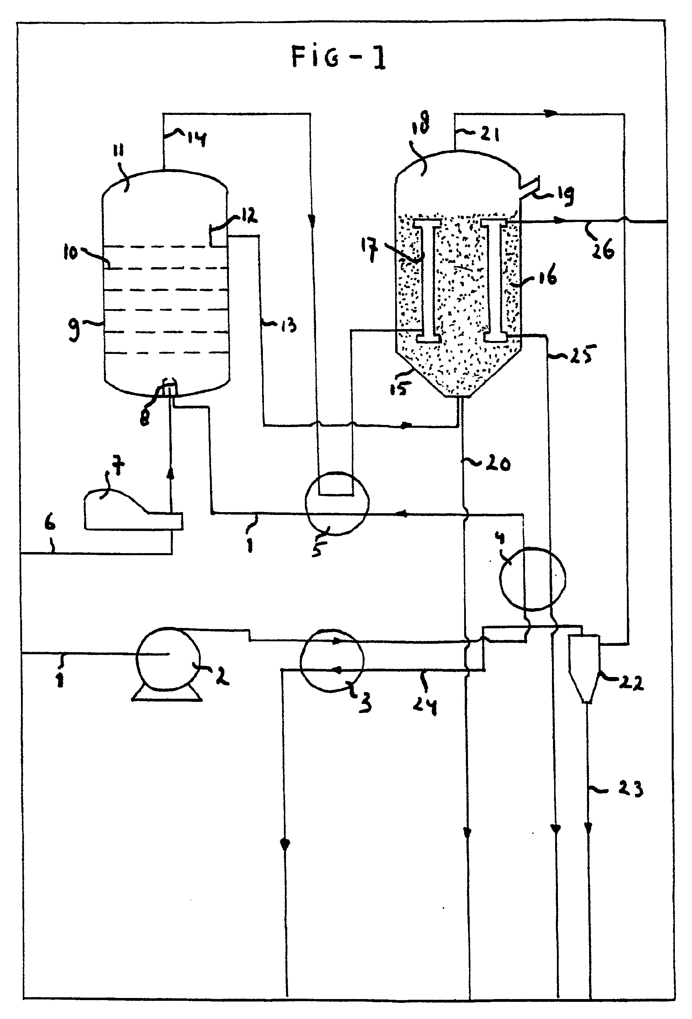

An embodiment for the execution of said process will be described with the help of figure 1. The mixture is supplied through pipe 1 and through pump 2 via heat exchangers 3, 4 and 5 and gas-slurry phase distributor 8 pumped to reaction section 9. An oxygen containing gas, for example air, is als put into reaction section 9 via pipe 6, compressor 7 and distributor 8. The dispersion of gas in slurry phase flows through openings in baffles 10. Reactions take place and after a certain reaction time water vapour and gas are separated from the slurry phase in space 11. The slurry phase flows into draw-off tray 12 and subsequently it flows via pipe 13 to evaporation section 15, which consists here of a vessel containing a fluidized bed 16. Thrown up particles of solid matter are separated from vapour and possible gas in space 18, after which vapour and possible gas leaves via pipe 21 the evaporation section. Possible entrained solid matter is caught in cyclone 22 and carried to a product storage via pipe 23. Subsequently vapour and possible gas flows via pipe 24 to heat exchanger 3, in which heat is transferred to the mixture. The condensate with possible vapour, which has not been condensed, may be used for heating of houses and subsequently drained, as it concerns comparatively clean water.

After that water vapour and gas have been separated from the slurry phase, this gas stream flows via pipe 14 and heat exchanger 5, in which heat is transferred to the mixture, if necesarry, to heat exchanger 17. In the latter heat is transferred to the fluidized bed and ultimately used to evaporate water from the slurry phase. Condensate flows via pipe 25 to heat exchanger 4, in which heat is transferred to the mixture in pipe 1. The remaining heat may be used for heating of houses, after which the condensate can be drained. Gas releases from heat exchanger 17 via pipe 26 and heat in this stream may also be used for heating of houses. Via pipe 20 solid matter is discharged regularly from the fluidized bed and carried to a product storage. Possible addition of solid matter into the fluidized bed may take place via inlet 19.

The invention offers a solution notably for said problems with respect to manure slurry as may become evident from the following remarks. First it must be mentioned, that from a technical and economical point of view the process may be executed on large scale as well as on a small scale. As a comparative small installation may be situated near the live-stock houses, transport costs of manure slurry to the installation may be eliminated almost entirely. As the product may be considered as high value fertilizer, which can be transported comparatively cheap, this product could be sold in areas with manure shortages, by which high concentrations nutritious matter and metals, such as copper and cadmium, could be avoided on grassland and agricultural soils. Ammonia emission and stench nuisance may be reduced significantly, if produced manure slurry can be converted and worked up nearly immediately. The latter becomes a possibility by situating the installation near the live-stock houses. Pathogenic micro-organisms and weed seeds will not survive the comparatively long times, during which they are exposed to high temperatures. An extra advantage of this invention are the relatively large amounts of 'low temperature' heat, which can be used for heating of houses.

The invention will be illustrated with the help of an example.

An installation, in which said process may be executed, is situated on a farm with a live-stock of 3000 pigs. The manure production amounts to 4500 tonnes of manure slurry per year. The installation is operated continously during 330 days per year, which means a throughput of about 0.16 kilogram manure slurry per second. Also 0.06 kilogram air per second is supplied. The manure slurry contains in this example 10% by weight solid matter and the chemical oxygen demand (COD) amounts to 100 kilogram per cubic meter.

In the reaction section the degree of conversion amounts to 80% after 1800 seconds of reaction time. The temperature of the slurry phase and gas immediately after reaction amounts to 255 degrees Celsius and the pressure is 60 bar. After reaction more than 50% of the water, which was present in the supplied manure slurry, has been evaporated. After separation of water vapour on the one side and slurry phase on the other side, notably the latent heat of the vapour is used via indirect heat exchange in the fluidized bed to evaporate water in the slurry phase largely or entirely. The fluidized bed is operated at 100 degrees Celsius.

The production of solid matter is roughly 12.5 kilogram per hour, which contains roughly 4 kilogram per hour total nitrogen, 2.3 kilogram per hour phosphorus, calculated as P2O5, and also 2.3 kilogram per hour potassium, calculated as K2O. The heat, present in notably vapour and condensate streams of roughly 100 degrees Celsius and emanated from the installation, may be used to heat live-stock houses and greenhouses nearby. In this example this rest heat corresponds with the heat of combustion value of about 100,000 cubic meter of natural gas per year.

## Claims

1. Process for the conversion and working up of a mixture of organic matter, in organic mater and water to nearly dry matter, whereby the mixture is contacted with an oxygen containing gas and put to reaction in a reaction section at temperatures between 200 and 320 degrees Celsius, pressures between 40 and 125 bar and reaction times between 300 and 5400 seconds with the feature, that after reaction mixture and gas are separated on the one side in slurry (fluid) phase, which contains dissolved and not dissolved organic matter and anorganic matter and on the other side water vapour containing gasphase, of which heat is used for heating of the mixture and for evaporation of water from the slurry phase, which therefor is led to an evaporation section, which is equipped with evaporation means and which may consist of various units and which is operated at lower temperatures and pressures than the temperature and pressure of the slurry phase and gas phase immediately after reaction and of which at least one unit contains a fluidized bed of particles of solid matter, which covers evaporation means entirely or partially and in which organic matter and in organic matter, emanating from the slurry phase are caught and form part of the fluidized bed, so that parts of the fluidized bed mass may be discharged periodically or continously as a nearly dry matter.

2. Process according claim 1 with the feature, that heat from the gas phase, obtained after reaction by separation from slurry phase, is transferred via the walls of an heat exchanger to a fluidized bed, which is operated at a temperature and pressure between 60 and 240 degrees Celsius and 0.2 and 40 bar respectively and in which water from slurry phase is evaporated largely or entirely, while organic and anorganic matter is caught in the fluidized bed.

3. Process according claims 1 and 2 with the feature, that the fluidized bed contains in the first instance a suitable solid matter, such as for example sand with such particle sizes and density, that the particles are fluidized by the gas stream in the bed and whereby gradually the concentrations of organic matter and anorganic matter can increase by deposition on particles of solid matter as well as in the form of particles, which form part of the fluid bed, so that in principle the fluidized bed largely or even entirely may consist of organic and anorganic matter, while, if necessarry, said suitable solid matter can be added periodically or continuously and furthermore care is taken of the periodical or continuous discharge of the fluidized bed mass.

4. Process according to claims 1, 2 and 3 with the feature, that additional gas is used to fluidize the particles of solid matter in the bed and to discharge water vapour, whereby possibly gas from the heat exchanger in the fluidized bed is to be used.

5. Process according to claim 1 with the feature, that after by-passing the reaction section an extra stream of mixture is fed to the evaporation section, where after partial or total evaporation of water extra organic matter and anorganic matter is caught in the fluidized bed.

6. Installation for the execution of the process according to claims 1, 2, 3, 4 and 5 with the feature, that this installation consists of one or more reaction vessels, equipped with perforated baffles installed at some distance from each other and a provision for the separation of gas phase and slurry phase, moreover there are one of more evaporators, of which at least one evaporator contains a fluidized bed and these are equipped with evaporation means, while furthermore compressor(s), pump(s) and heat exchangers as well as solids-gas separation apparatus form part of the installation.

7. Application of the process according to claim 1 with the feature, that the mixture consists largely of manure slurry.

8. Application of the process according to claim 1 with the feature, that the mixture consists largely of fluid sewage.

## Patentansprüche

1. Verfahren für die Umwandlung und Aufarbeitung eines Gemisches von organischen Stoffen, anorganischen Stoffen und Wasser zu einer fast trockenen Substanz, wobei das Gemisch mit einem sauerstofhaltigen Gas in Berührung gebracht und in einem Reaktionsteil bei Temperaturen zwischen 200 und 320 Grad Celsius, Drücken zwischen 40 und 125 bar und Reaktionszeiten zwischen 300 und 5400 Sekunden zur Reaktion gebracht wird, mit dem Merkmal, daß nach der Reaktion Gemisch und Gas getrennt werden in einerseits eine (flüssige) Schlammphase, die gelöste und nicht gelöste organische Stoffe sowie anorganische Stoffe enthält, und andererseits wasserdampfhaltige Gasphase, deren Wärme zur Erhitzung des Gemisches und zur Verdampfung von Wasser aus der Schlammphase genutzt wird, die zu diesem Zweck einem mit Mitteln zur Verdampfung ausgestatteten Verdampfungsteil zugeführt wird, der aus verschiedenen Einheiten bestehen kann und bei Temperaturen und Drücken betrieben wird, die unter denen der Schlammphase und der Gasphase unmittelbar nach der Reaktion liegen und von denen mindestens ein Einheit eine Wirbelschicht von Feststoffpartikeln enthält, die die Mittel zur Verdampfung ganz oder teilweise abdeckt und in der organische und anorganische Stoffe, die aus der Schlammphase hervorkommen, aufgefangen werden und einen Teil der Wirbelschicht bilden, so daß Teile der Wirbelschichtmasse regelmäßig oder ständig als fast trockene Substanz ausgeschieden werden können.

2. Verfahren nach Patentanspruch 1 mit dem Merkmal, daß Wärme von der Gasphase, die nach der Reaktion durch Trennung von der Schlammphase gewonnen wird, über die Wände eines Wärmetauschers auf eine Wirbelschicht Übertragen wird, die bei Temperaturen und Drücken zwischen 60 und 240 Grad Celsius und 0,2 und 40 bar betrieben wird und in der Wasser aus der Schlammphase weitgehend oder völlig verdampft wird, während organische und anorganische Substanzen in der Wirbelschicht aufgefangen werden.

3. Verfahren nach den Patentansprüchen 1 und 2 mit dem Merkmal, daß die Wirbelschicht zunächst einen geeigneten Feststoff enthält, wie zum Beispiel Sand aus Partikeln solcher Größe und Dichte, daß diese Partikel durch den Gasstrom in der Wirbelschicht verwirbelt werden und dabei die Konzentrationen organischen und anorganischer Substanzen durch Ablagerung auf Feststoffpartikeln sowie in Form von Partikeln, die einen Teil der Wirbelschicht bilden, allmählich zunehmen kann, daß die Wirbelschicht im Prinzip weitgehend oder sogar völlig aus organischen und anorganischen Substanzen bestehen kann, während, falls erforderlich, die genannten geeigneten Feststoffe regelmäßig oder ständig zugesetzt werden können und daß weiterhin für die regelmäßige oder ständige Ausbringung der Wirbelschichtmasse gesorgt wird.

4. Verfahren nach den Patentansprüchen 1, 2 und 3 mit dem Merkmal, daß zusätzliches Gas zur Verwirbelung der Feststoffpartikel in der Wirbelschicht und zum Ablassen von Wasserdampf verwendet wird, wofür möglicherweise Gas aus dem Wärmetauscher in der Wirbelschicht verwendet wird.

5. Verfahren nach Patentanspruch 1 mit dem Merkmal, daß nach Umgehung des Reaktionsteils dem Verdampfungsteil ein zusätzlicher Gemischstrom zugeführt wird, wo nach teilweiser oder vollständiger Verdampfung des Wassers zusätzliche Mengen organischer und anorganischer Substanzen in der Wirbelschicht aufgefangen werden.

6. Anlage für die Durchführung des Verfahrens nach den Patentansprüchen 1, 2, 3, 4 und 5 mit dem Merkmal, daß diese Anlage aus einem oder mehreren mit einem oder mehreren perforierten Prallblechen, die in einiger Entfernung voneinander angebracht sind, und einer Vorrichtung zur Trennung von Gas- und Schlammphase ausgestatteten Reaktionsgefäß oder Reaktionsgefäßen besteht, sowie daß ein oder mehrere Verdampfer vorhanden ist oder sind, von denen zumindest einer eine Wirbelschicht enthält, und daß diese mit Mitteln zur Verdampfung ausgerüstet sind, während ferner (ein) Verdichter, (eine) Pumpe(n) und Wärmetauscher sowie Vorrichtung(en) zur Trennung von Feststoffen und Gasen Bestandteile der Anlage sind.

7. Anwendung des Verfahrens nach Patentanspruch 1 mit dem Merkmal, daß das Gemisch im wesentlichen aus Jaucheschlamm besteht.

8. Anwendung des Verfahrens nach Patentanspruch 1 mit dem Merkmal, daß das Gemisch im wesentlichen aus flüssigem Abwasser besteht.

## Revendications

1. Processus pour la conversion et l'élaboration d'un mélange de matières organiques, de matières inorganiques et d'eau visant à obtenir une matière presque sèche, et selon lequel le mélange est mis en contact avec un gaz contenant de l'oxygène et mis en réaction dans une section de réaction sous des températures comprises entre 200 et 320 degrés Celsius, des pressions comprises entre 40 et 125 bar et des temps de réaction compris entre 300 et 5400 secondes, caractérisé en ce que, après la réaction, le mélange et le gaz sont séparés d'une part dans une phase de boue (liquide) contenant des matières organiques dissoutes et non dissoutes ainsi que des matières inorganiques et, d'autre part, dans une phase gazeuse englobant de la vapeur d'eau, dont la chaleur est utilisée pour élever la température du mélange et pour l'évaporation de l'eau contenue dans la phase boueuse, qui est ainsi conduite vers une section d'évaporation dotée d'un équipement approprié, pouvant se composer de diverses unités et qui fonctionne sous des températures et des pressions inférieures aux températures et aux pressions de la phase boueuse et de la phase gazeuse aussitôt après la réaction et dont au moins une unité contient un lit fluidisé de particules de matières solides couvrant les moyens d'évaporation en tout ou en partie et dans lequel des matières organiques et des matières inorganiques, émanant de la phase boueuse, sont capturées et font alors partie du lit fluidisé de sorte que des parties de la masse de celui-ci peuvent être déchargées périodiquement ou en continu en tant que matières presque sèches.

2. Processus se déroulant conformément à la revendication 1, caractérisé en ce que la chaleur issue de la phase gazeuse, obtenue après réaction par séparation de la phase boueuse, est transférée par l'intermédiaire des parois de l'échangeur de chaleur vers un lit fluidisé fonctionnant sous une température et une pression respectivement comprises entre 60 et 240 degrés Celsius et 0,2 et 40 bar, et dans lequel l'eau en provenance de la phase boueuse est largement ou totalement évaporée, tandis que des matières organiques et inorganiques sont capturées dans le lit fluidisé.

3. Processus se déroulant conformément aux revendications 1 et 2, caractérisé en ce que le lit fluidisé contient en premier lieu une matière solide appropriée, comme par exemple du sable dont la granulométrie et la densité sont telles que les particules sont fluidisées par le flux gazeux dans le lit et que, de ce fait, les concentrations de matières organiques et inorganiques peuvent graduellement s'accroître par dépôt sur des particules de matières solides, ainsi que sous forme de particules qui font partie du lit fluidisé, de telle sorte qu'en principe le lit fluidisé peut se composer largement ou même en totalité de matières organiques et inorganiques, tandis que, si nécessaire, les matières solides appropriées en question peuvent être ajoutées périodiquement ou en continu et que, de surcroît, il est pris soin de la décharge périodique ou continue de la masse du lit fluidisé.

4. Processus se déroulant conformément aux revendications 1, 2 et 3, caractérisé en ce que du gaz supplémentaire est utilisé pour fluidiser les particules de matières solides dans le lit et pour décharger la vapeur d'eau, ce qui permet éventuellement d'utiliser le gaz en provenance de l'échangeur de chaleur dans le lit fluidisé.

5. Processus se déroulant conformément à la revendication 1, caractérisé en ce que, après le contournement de la section de réaction, un flux supplémentaire de mélange est transféré vers la section d'évaporation où, après l'évaporation partielle ou totale de l'eau, des matières organiques ou matières inorganiques supplémentaires sont capturées dans le lit fluidisé.

6. Installation en vue de l'exécution du processus conformément aux revendications 1, 2, 3, 4 et 5, caractérisé en ce que cette installation se compose d'un ou plusieurs réacteurs équipés de déflecteurs perforés et se trouvant à une certaine distance les uns des autres, et d'un dispositif permettant la séparation de la phase gazeuse et de la phase boueuse ; il y a en outre un ou plusieurs évaporateurs dont l'un au moins contient un lit fluidisé ; ceux-ci sont équipés de moyens d'évaporation tandis que, de surcroît, un ou plusieurs compresseurs, une ou plusieurs pompes et des échangeurs de chaleur ainsi qu'un appareillage pour la séparation gaz-solides font partie de l'installation.

7. Application du processus conformément à la revendication 1, caractérisée en ce que le mélange se compose en grande partie de boue de fumier.

8. Application du processus conformément à la revendication 1, caractérisée en ce que le mélange se compose en grande partie de produits d'égout liquides.

# FiG-1